# EUROPEAN PATENT SPECIFICATION

(11) **EP 3 025 472 B1**
(45) Date of publication and mention of the grant of the patent: **23.08.2017**
(21) Application number: 13745805.5
(22) Date of filing: 25.07.2013
(51) Int. Cl.: H04L 29/06

(54) **APPARATUS FOR COMMUNICATING A SIGNAL ACCORDING TO A COMMUNICATION MODEL AND NETWORK NODE COMPRISING THE APPARATUS**
VORRICHTUNG ZUR ÜBERMITTLUNG EINES SIGNALS GEMÄSS EINEM KOMMUNIKATIONSMODELL UND NETZWERKKNOTEN MIT DER VORRICHTUNG
APPAREIL POUR COMMUNIQUER UN SIGNAL EN FONCTION D'UN MODÈLE DE COMMUNICATION ET NOEUD DE RÉSEAU COMPRENANT L'APPAREIL

(43) Date of publication of application: 01.06.2016
(73) Proprietor: Fraunhofer Gesellschaft zur Förderung der angewandten Forschung e.V., 80686 München (DE)
(72) Inventor: GREGORIUS, Peter, 13469 Berlin (DE)
(74) Representative: Zimmermann, Tankred Klaus
(86) International application number: PCT/EP2013/065727
(87) International publication number: WO 2015/010741

(56) References cited:
- WO-A1-2004/080026
- US-A1- 2008 137 855
- US-B1- 7 360 083

## Description

The invention relates to an apparatus for communicating a signal according to a communication model, comprising a hard-wired encryption circuit for encrypting or decrypting the signals to be communicated.

The incredible growth of the internet has excited businesses and consumers alike with its promise of changing the way information is exchanged. It is extremely easy to buy and sell goods all over the world while sitting in front of a personal computer. However, security is a major concern of the internet technology, especially while sending sensitive information between parties and companies.

Information security is provided on computers and over the internet by a variety of methods. The simplest method is to remove the storage device which contains sensitive information. The most popular forms of security all rely on encryption, the process of encoding information in such a way that only the person or the computer knowing the key can decode the information or data stream.

Network security techniques are mainly based on software solutions. Encryption technologies are based on complex algorithms to protect the user data with different levels of security. Today's computers use symmetric-key encryption to send information between each other. For decryption, the computers must have the same key. For service and flexibility purposes this add-on encryption is mainly part of the operating system (OS) and written in high level programming languages. The first major symmetric algorithm developed for computers in the United States was the Data Encryption Standard (DES). As an example, a 56-bit DES-key offers more than 70 quadrillion possible combinations (70,000,000,000,000,000), an attack of brute force, meaning simply trying every possible combination of a key in order to find the right key, could easily decipher encrypted data in a short while. DES has since been replaced by the Advanced Encryption Standard (AES), which uses 128-, 192- or 256-bit keys. One of the weaknesses some point out about symmetric-key encryption is that two users attempting to communicate encrypted with each other need a secure way to exchange a key which is later used for encryption.

Otherwise or in case an attacker corrupts the way on which the key is exchanged, the attacker can easily pluck the necessary data from the stream.
An alternative solution uses asymmetric-key encryption. In this case, the encryption is based on a public-key encryption in combination with a private-key encryption. To implement public-key encryption, digital certificates are needed. A digital certificate is basically a unique piece of code or a large number which says that the web server is trusted by an independent source known as a certificate authority. The certificate authority acts as a middleman that both computers trust. It confirms that each computer is in fact the one it says it is, and then provides the public keys of each computer to the other. The key in public-key encryption is based on a hash value. This is a value that is computed from a base input number using a hashing algorithm.
A popular implementation of public-key encryption is the Secure Sockets Layer (SSL). SSL is an internet security protocol used by internet browsers and web servers to transmit sensitive information. SSL has become part of an overall security protocol known as Transport Layer Security (TLS).
Digital signatures are basically a way to ensure that an electronic document, e.g. an email, a spreadsheet or a text file, is authentic. The Digital Signature Standard (DSS) is based on a type of public-key encryption method that uses the Digital Signature Algorithm (DSA).

US20080137855, US7360083 and WO20040800266 disclose further network security techniques based on software solutions. The above described techniques are mainly implemented as a piece of software inside or as a part of the operating system, e.g. Linux, or as a software which has to be installed as a software block to a system.
There are a lot of different techniques and algorithms under discussion or development to secure data transfer. A general trend is a rise in complexity in the algorithm design.

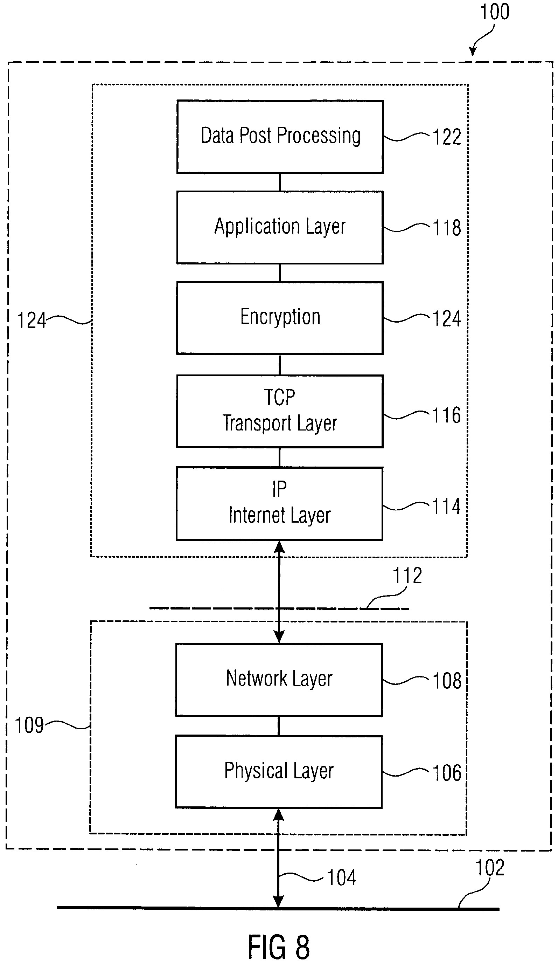

Online communication between peers, e.g. computers or servers may be described by different communication models, such as a TCP/IP model or an open systems interconnection (OSI) model. Fig. 8 depicts an exemplary modeling of a network node 100 by the TCP/IP model and further layers. The TCP/IP model comprises a plurality of layers, namely a Physical Layer, a Network Layer, an IP Internet Layer and a TCP Transport Layer, wherein each layer defines a subset of a functionality of communicating a signal from one peer to another. A layer can be implemented as a piece of code or software or can be implemented as a hard-wired-circuit for example. A hard-wired circuit can be understood as a circuit configured to implement a capability or a functionality through logic circuitry that is permanently connected within a peer, e.g. a computer and therefore not subject to change by programming. Thus, a hard-wired circuit may be operated independently from an operating system, a software or a program.

Fig. 8 shows a schematic block diagram depicting an implementation of encryption technologies, e.g. for internet data transfer. A data encryption is completely done in the software domain, here after the TCP/IP layer as example. The network node 100 is connected to a network medium 102, e.g. an Ethernet network, by a network connection 104. The communication of the network node 100 is partially performed according to the TCP/IP communication model. A hardware domain 109 and a software domain 124 are separated by a hardware-software border 112 which can be implemented for example as a terminal of a hardware providing signals to a central processing unit executing a program. A Physical Layer 106 and a Network Layer 108 are implemented as hardware and form the hardware domain 109. Functionalities of further layers of the TCP/IP model, namely of an IP Internet Layer 114 and a TCP Transport Layer 116 and also functionalities extending the TCP/IP model like an Application Layer 118 and a Data Post Processing Layer 122 are implemented as software. Although the Data Post Processing Layer 122 is sometimes unmentioned by explanations referring to the TCP/IP stack, it is referred hereinafter as a layer with a functionality of data post processing, e.g. storing or editing data. Thus, those layers form the software domain 124. An Encryption Layer 124 is arranged between the TCP Transport Layer 116 and the Application Layer 118 within the software domain. To summarize, encryption of the communication is done in the Encryption Layer 124 in software. As described above, implementing a layer by software is dependent on the operating system and therefore uses computational power of a Central Processing Unit (CPU) running the operating system.

In general, the data encryption and therefore an encryption algorithm can be part of the Personal Computer (PC) operating system or an additional software package which has to be installed on the PC. An update of the encryption algorithm is done via software or with a hardware dongle which has to be connected to the PC or hardware system.

A task of the present invention is to provide an apparatus for communicating a signal according to a communication model, so that encryption can be performed with a higher security.

This task is solved by an apparatus according to claim 1, a network node according to claim 13 and a communication network according to claim 15.

An embodiment of the present invention comprises an apparatus for communicating a signal according to a communication model which is described by a plurality of layers, each layer describing a subset of a functionality of the communication model, the apparatus comprising a hard-wired encryption circuit for encrypting or decrypting the signal to be communicated. An advantage of the embodiment is an improved security of the encryption and decryption as an encryption or decryption may be performed independently from software and is therefore unable to be compromised by copying software.

A further embodiment provides a network node comprising an apparatus with a hard-wired encryption circuit for performing network communication with an increased security. An advantage of the embodiment is a reduced load of a processing unit running an operating system or executing software of the network node, as encryption or decryption is performed independently from the processing unit. Furthermore the level of security for a hard-wired encryption circuit is higher in contrast to a Software-domain encryption due to the encapsulated encryption circuit what can't be accessed via the operation system neither other software tools.

A further embodiment provides a communication network with a plurality of network nodes comprising an apparatus with a hard-wired encryption circuit. An advantage of the embodiment is that a throughput of a network media may be increased as encryption is performed by hardware instead of software so that reduced computational power is required for communication. Alternatively or in addition, encryption or decryption can be performed independently from the processing unit without being reduced in terms of throughput or speed due to the high load of the processing unit.

### Brief Description of the Drawings

- Fig. 1: shows a schematic block diagram of an apparatus comprising a hard-wired encryption circuit and a logic according to an embodiment of the present invention;
- Fig. 2: shows a schematic block diagram of another apparatus comprising the hard-wired encryption circuit for implementing the Encryption Layer according to an embodiment of the present invention;
- Fig. 3: shows a schematic block diagram of an apparatus comprising the functionality of two communication layers and the hard-wired encryption circuit according to an embodiment of the present invention;
- Fig. 4: shows a schematic block diagram of an apparatus according to an embodiment of the present invention, wherein the communication model comprises a second encryption layer;
- Fig. 5: shows a schematic comparison between an OSI model and a protocol stack comprising the TCP/IP stack;
- Fig. 6: shows a schematic block diagram of a network node configured to communicate a signal according to the communication model of a protocol stack according to an embodiment of the present invention;
- Fig. 7: shows a schematic block diagram of a communication network comprising the network nodes according to an embodiment of the present invention;
- Fig. 8: shows a schematic block diagram depicting an implementation of encryption technologies, e.g. for internet data transfer.

### Detailed Description of the Invention

Equal or equivalent elements or elements with equal or equivalent functionality are denoted in the following description by equal or equivalent reference numerals.

In the following description, a plurality of details are set forth to provide a more thorough explanation of embodiments of the present invention. However, it will be apparent to those skilled in the art that embodiments of the present invention may be practiced without these specific details. In other instances, well known structures and devices are shown in block diagram form rather than in detail in order to avoid obscuring embodiments of the present invention. In addition, features of the different embodiments described hereinafter may be combined with each other, unless specifically noted otherwise.

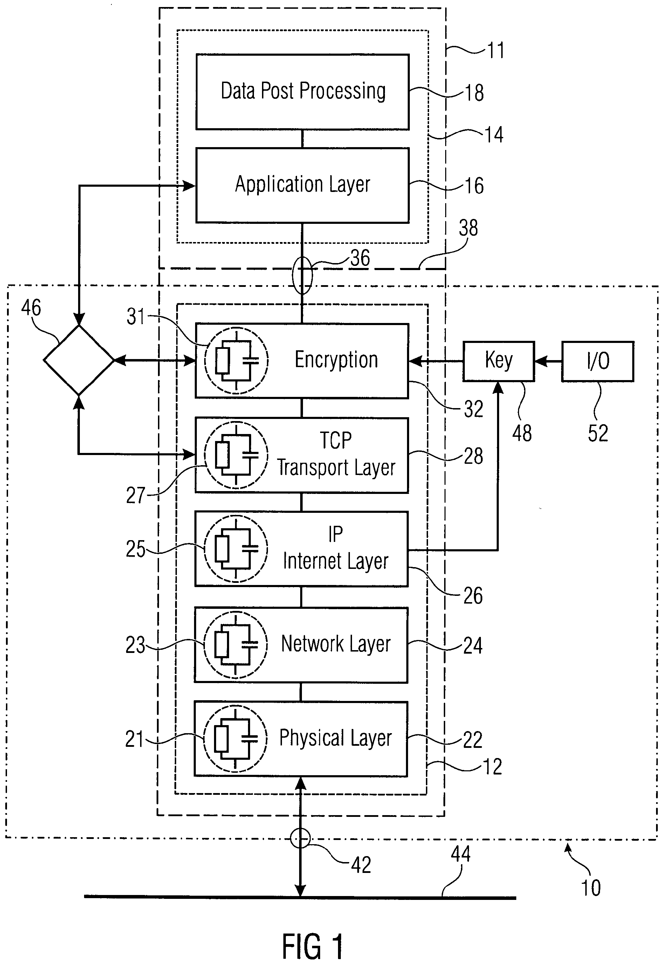

Fig. 1 shows a schematic block diagram of an apparatus 10 configured to implement partially communication according to a communication model by implementing at least partially functionalities of layers of a protocol stack 11, wherein the protocol stack 11 depicts the communication model which is based partially on a TCP/IP layer model.

Apparatus 10 may be for example a network interface or part of a network interface mounted to a personal computer. The protocol stack stack 11 comprises a hardware domain 12 and a software domain 14. The software domain 14 comprises a subset of the layers of the protocol stack 11, which are implemented as software in terms of a software or a block of code run or executed for example by a CPU. The hardware domain 12 comprises a subset of the layers of the protocol stack 11, whose functionalities are implemented in hardware by means of a hard-wired circuit. The software domain 14 is formed by an Application Layer 16 and a Data Post Procession Layer 18. Apparatus 10 comprises a hard-wired circuit 21 configured to implement a functionality a of a Physical Layer 22, a hard-wired circuit 23 to implement a functionality of a Network Layer 24, a hard-wired circuit 25 to implement a functionality of an IP Internet Layer and a hard-wired circuit 27 to implement a functionality of a TCP Transport Layer 28. The Physical Layer 22, the Network Layer 24, the IP Internet Layer 26 and the TCP Transport Layer 32 form a stack according to the TCP/IP model, therefore a TCP/IP stack and the complete TCP/IP internet protocol engine. The Physical Layer 22, the Network Layer 24, the IP Internet Layer 26 and the TCP Transport Layer 28 further form the hardware domain 12. An encryption Layer 32 is arranged within the hardware domain 12 between a terminal 36 of the apparatus 10 and the TCP Transport Layer 28. The terminal 36 is configured to receive and transmit the signal from layers of the apparatus 10 to or from outside the apparatus 10, e.g. to the Application Layer 16. The terminal 36, e.g. an interface, for receiving and transmitting the signal forms a border 38 between the hardware domain 12 and the software domain 14.

Functionalities of the Encryption Layer 32 are implemented by a hard-wired encryption circuit 31, configured to implement decryption of an encrypted signal received from or transmitted to the TCP Transport Layer 28 and to provide the decrypted signal to the Application Layer 16 or the TCP Transport Layer 28 via the terminal 36. The hard-wired encryption circuit 31 is further configured to encrypt a signal received from the Application Layer 16 via the terminal 36 and to provide the encrypted signal to the TCP Transport Layer 28. In contrast, layers arranged in the software domain 14, namely the Application Layer 16 and the Data Post Processing Layer 18, are implemented in software and therefore a block of code run by a program or an operating system.

A hard-wired circuit implementing a layer in the hardware domain 12 may allow an implementation of a functionality corresponding the layers implemented in hardware and thus performing the functionality independently from software. An implementation of layers or parts of layers by a hard-wired circuit can lead to a reduced load of a Central Processing Unit (CPU) which runs or computes programs and/or the operating system. Therefore, also the encryption implemented by the Encryption Layer 32 may be done independently from a program or an operating system and may therefore lead to reduced loads of the CPU.

For example, terminal 36 may be an input port of a CPU or a plurality of input ports of the CPU providing communication signals for software applications or the operating system run on the CPU. As the TCP Transport Layer 28 is implemented by the hard-wired circuit 27, the Encryption Layer 32 is arranged between the hard-wired circuit 27 and the terminal 36. Apparatus 10 further comprises a terminal 42 configured to be connected to a communication network, e.g. an Ethernet local area network (LAN), for receiving or transmitting a signal from the communication network or to the communication network. Apparatus 10 is connected to an Ethernet cable 44 through the terminal 42. Apparatus 10 is configured to receive a signal from the Ethernet cable 44 via the terminal 42 and to process the signal according to the TCP/IP communication model and according to the Physical Layer 22, the Network Layer 24, the IP Internet Layer 26 and the TCP Transport Layer 28. Apparatus 10 is further configured to decrypt the received signal and to output the decrypted signal via the terminal 36. The received signal from the Application Layer 16 via the terminal 36 is encrypted and processed via the TCP Transport Layer 28 to the Ethernet cable 44.

Apparatus 10 comprises a logic 46 configured to enable a deactivation of the encryption or the decryption of the hard-wired encryption circuit 31 responsive to a predefined parameter associated with the signal received from the Ethernet cable 44 or the Application Layer 16. The predefined parameter may be realized as a sequence of bits within the signal and configured to indicate that the signal shall be encrypted or decrypted or that the signal shall bypass the encryption circuit 31. The logic 46 is connected bidirectional to the Application Layer 16 and the TCP Transport Layer 28 so that the signal can be received and sent from and to the TCP Transport Layer 28 and the Application Layer 16. The logic 46 can be implemented as a hard-wired circuit or a software, run for example by a processing unit of the apparatus 10. In particular, the logic 46 is configured to cause the signal received from the TCP Transport Layer 28 or the Application Layer 16 to bypass the hard-wired encryption circuit 31 implementing functionalities of the Encryption Layer 32 in case the predefined parameter indicates that the signal requires no encryption or decryption. Thus, the logic 46 is able to forward the signal from the Application Layer 16 to the TCP Transport Layer 28 and from the TCP Transport Layer 28 to the Application Layer 16. The logic 46 is also connected to the hard-wired encryption circuit 31. The signal received from the Application Layer 16 or the TCP Transport Layer 28 is evaluated with respect to the predefined parameter. In case the signal shall not bypass the hard-wired encryption circuit 31, the logic 46 is configured to input the signal to the hard-wired encryption circuit 31. The decrypted or encrypted signal is then forwarded to the Application Layer 16 or the TCP Transport Layer 28.

Bypassing the hard-wired encryption circuit 31 may be selected by a user or a communication instance such as a program, for example to send an initial communication signal for negotiating communication parameters, e.g. a preferred bitrate, a predefined communication protocol or as a part of an authentication procedure during an subscription procedure of a user.

The hard-wired encryption circuit 31 uses a key to encrypt or decrypt the signal. A storage 48, e.g. a volatile memory circuit, is configured for holding the encryption key or the decryption key and to provide the key for the hard-wired encryption circuit 31 through a connection of the storage 48 to the hard-wired encryption circuit 31. The storage 48 is configured to obtain the key to be stored either by the IP Internet Layer 26 as indicated by the arrow between the IP Internet Layer 26 and the storage 48 or to receive the encryption key or the decryption key via an input/output (IO) interface 52 connected to the storage 48. The IO interface 52 can be realized as a connector, e.g. an universal serial bus (USB) connector comprising a receptacle configured to be connected with a USB plug. The storage 48 can comprise a memory element, e.g. a non-volatile semiconductor chip, which is connected to the hard-wired encryption circuit 31. Alternatively or in addition, the memory element can be a part of the hard-wired encryption circuit 31. Holding or storing a key received via the IP Internet Layer 26 or via the IO interface 52 enables an encrypted communication by using the stored key right after a powering of apparatus 10 without a reception of a new key.

An advantage of implementing encryption as a hard-wired encryption circuit 31 lies in additional security features provided. Software or a block of code can be copied or compromised, for example by an external user attacking the system. A stolen encryption algorithm or encryption key or a compromised encryption procedure may be useless for a user, e.g. a communication software or a person, or may also lead to additional risks, as users think or expect to perform a safe encrypted communication which is actually compromised or decrypted by unauthorized users. Alternatively or in addition and with respect to a software based encryption, a stolen, e.g. copied or compromised, encryption key can remain undetected for a while. In contrast, the hard-wired encryption circuit 31 cannot be copied by software. Also, a thievery of the hard-wired encryption circuit 31 will not stay undetected, simply because hardware components necessary for performing communication are missing and therefore a communication will get disrupted in case of a thievery. The disruption may be detected very easy by a superimposed software running on the network node.

The hard-wired encryption circuit 31 can be for example realized statically as a circuitry on a printed circuit board. Alternatively or in addition, the hard-wired encryption circuit 31 can be realized as a re-configurable circuitry such as a field programmable gate array (FPGA). This enables a re-configuration of the hard-wired encryption circuit 31, for example to upgrade or update encryption of the Encryption Layer 32.

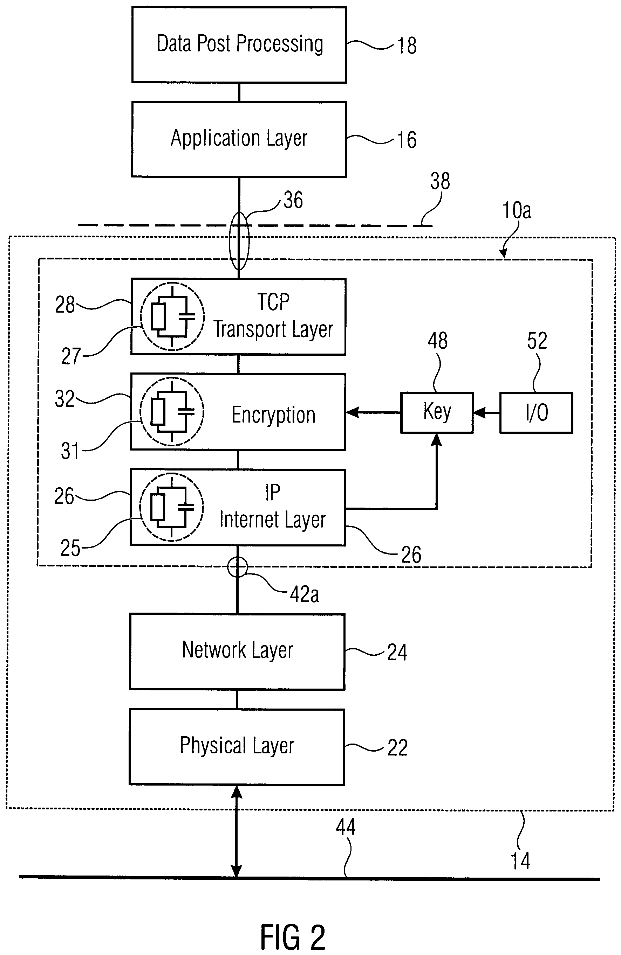

Fig. 2 shows a schematic block diagram of an apparatus 10a comprising the hard-wired circuit 25 for implementing the functionality of the IP Internet Layer 26, the hard-wired circuit 27 for implementing the functionality of the TCP Transport Layer 28, the hard-wired encryption circuit 31 for implementing the Encryption Layer 32, the storage 48 and the IO interface 52. The apparatus 10a further comprises a terminal 42a configured to receive the signal from the Network Layer 24 or to send the signal to the Network Layer 24. The hard-wired encryption circuit 31 for performing decryption and encryption is arranged between the circuit 35 and the circuit 27. Thus, the hard-wired encryption circuit 31 and therefore the Encryption Layer 32 is hidden inside the functionality of apparatus 10a. The signal is encrypted or decrypted by the apparatus 10a after it was processed by the IP Internet Layer 26 or the TCP Transport Layer 28 and is output by the IP Internet Layer 26 or the TCP Transport Layer 28.

In contrast to the embodiment described in Fig. 1, the apparatus 10a comprises a subset of the hardware domain 12. The Physical Layer 22 and the Network Layer 24 are arranged outside the apparatus 10a. A hidden Encryption Layer 32 enables an increased safety of communication, as without having access to signal lines of the circuitry of the apparatus 10a only encrypted or decrypted signals that are afterwards processed and therefore altered an additional time by a further communication layer can be accessed via the terminals 36 and 42a. In case apparatus 10a comprises a housing, the signal lines of the circuitry are accessible by opening, e.g. damaging the housing, which may be detected.

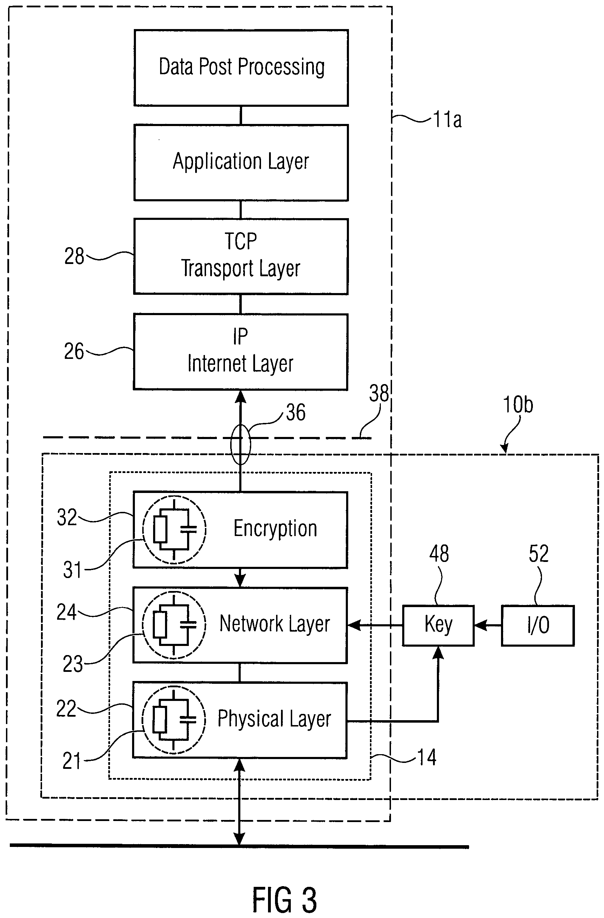

Fig. 3 shows a schematic block diagram of an apparatus 10c comprising the storage 48 and the IO interface 52, the hard-wired circuit 21 for implementing the functionality of the Physical Layer 22, the hard-wired circuit 23 for performing the functionality of the Network Layer 24 and the hard-wired encryption circuit 31 for performing the functionality of the Encryption Layer 32. The Encryption Layer 32 is arranged between the Network Layer 24 and the terminal 36 adjacent to the IP Internet Layer 26. In contrast to the embodiments of Fig. 1 and Fig. 2, the functionality of the IP Internet Layer 26 and the TCP Transport Layer 28 is implemented in software. As a result, with respect to Fig. 1, a higher amount of functionality of a protocol stack 11 a is implemented in software than in the protocol stack 11 depicted in Fig. 1. This may lead to a higher flexibility of the communication as the CPU may process different communication protocols relating to a layer depending on the communicating software, e.g. an email program or a browser, executed by the CPU. In addition, such an embodiment may result in a reduced hardware effort which may lead to less required space and reduced costs.

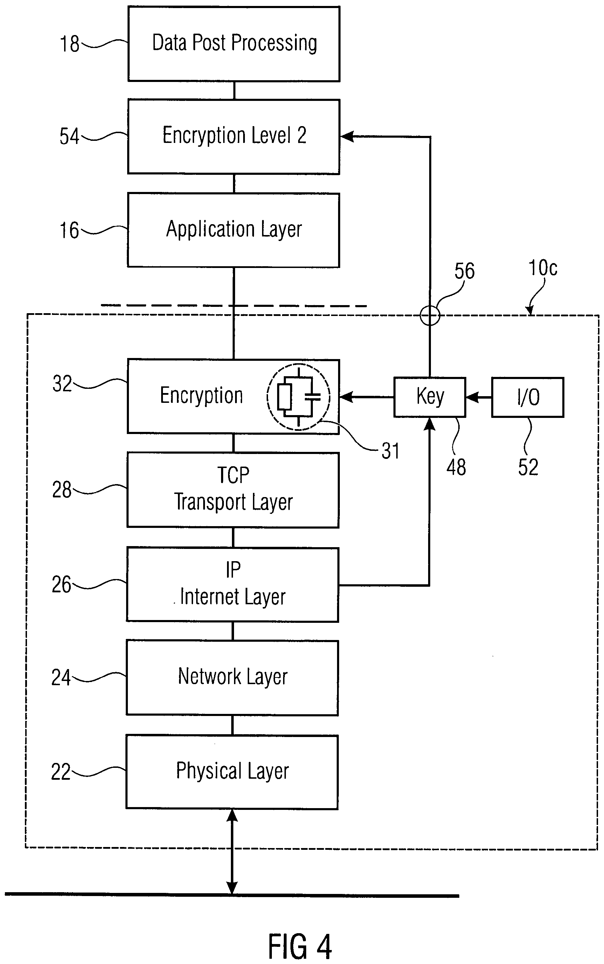

Fig. 4 shows a schematic block diagram of an apparatus 10c implementing the functionalities of the Physical Layer 22, the Network Layer 24, the IP Internet Layer 26 and the TCP Transport Layer 28. The apparatus 10c comprises the hard-wired encryption circuit 31 for performing the functionality of the Encryption Layer 32. Between the Application Layer 16 and the Data Post Processing Layer 18, a further Encryption Layer 54 is arranged for performing a software based encryption or decryption on a second level using the same key as the Encryption Layer 32. Apparatus 10c comprises a terminal 56 configured to provide the encryption key stored in the storage 48. The software based encryption 54 can access the storage 48 and obtain the therein stored key via the terminal 56.

Performing two instances of encryption or decryption can lead to a higher level of security with respect to the signal to be communicated. Alternatively or in addition, the first level of encryption or decryption, formed by the hard-wired encryption circuit 31 may be used as a support for the CPU in terms of some steps of decrypting or encrypting the signal are performed in hardware by the hard-wired encryption circuit 31 and the second level of the encryption or decryption is performed by the Encryption Layer 54 and therefore by the CPU.

Apparatus 10, 10a-c are configured for communicating a signal according to a communication model which is described by a plurality of layers. Each layer describes a subset of a functionality of the communication model. Although the described embodiments partially relate to the TCP/IP communication model, further embodiments relate to the OSI model.

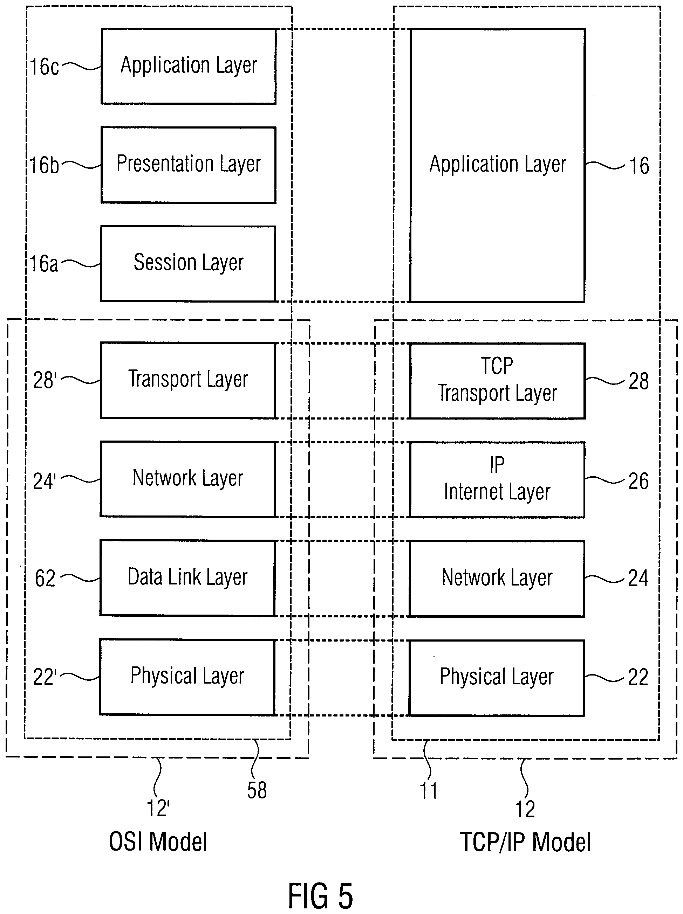

Fig. 5 shows a schematic comparison between an OSI 58 model and the protocol stack 11 which comprises the TCP/IP model, the TCP/IP stack respectively. The TCP/IP stack is formed by the Physical Layer 22, the Network Layer 24, the IP Internet Layer 26 and the TCP Transport Layer 28 of the protocol stack 11. Thus, the protocol stack 11 is formed by the TCP/IP stack and the Application Layer 16. Communication represented in one of the communication models, the OSI model 58 or the protocol stack 11 may also be described in the corresponding other model or stack. A hardware domain 12' of the OSI model 58 comprises a Physical Layer 22', a Data Link Layer 62, a Network Layer 24' and a Transport Layer 28'. The Physical Layer 22' comprises a similar or equal function as the Physical Layer 22. The Network Layer 24' comprises a similar or equal function as the Network Layer 24 and the Transport Layer 28' comprises a similar or equal function as the TCP Transport Layer 28. Differences between the OSI model 58 and the protocol stack 11 are mainly represented between the Application Layer 16 of the protocol stack 11 that is represented by three layers, a Session Layer 16a, a Presentation Layer 16b and an Application Layer 16c of the OSI model. The OSI model enables therefore a finer representation of functionalities within a software based application layer. Essential functionalities of the protocol stack 11, in particular with respect to functionalities implemented by hard-wired circuits can be transferred between the OSI model 58 and the protocol stack 11. As a result, a hard-wired encryption circuit described with respect to the protocol stack 11 or the TCP/IP stack can also be described with respect to the OSI model 58, as both models depict same or similar steps of communication in a different way. As shown in Fig. 1-4, different layers may either be implemented in software or in hardware or as a combination of both. Said is valid also for the OSI model 58, so that further embodiments may comprise a hardware domain 12' implementing functionalities of all or a subset of the Physical Layer 22', the Data Link Layer 62, the Network Layer 24' or the Transport Layer 28'.

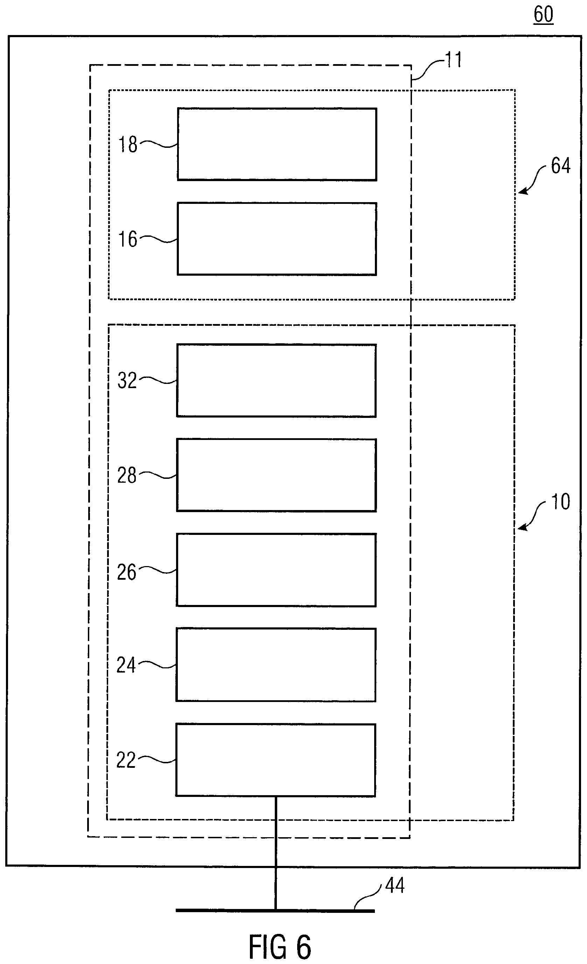

Fig. 6 shows a schematic block diagram of a network node 60 configured to communicate a signal according to the protocol stack 11. The network node 60 comprises the apparatus 10 configured to perform the functionality of the Physical Layer 22, the Network Layer 24, the IP Internet Layer 26, the TCP Transport Layer 28 and the Encryption Layer 32. The network node 60 further comprises a signal processing unit 64 configured to implement the functionalities of the Application Layer 16 and the Data Post Processing Layer 18. The network node 60 is connected to a network via the Ethernet cable 44 and is enabled to communicate to other network nodes via the Ethernet cable 44. The signal processing unit 64 is configured to perform the functionality of the remaining layers of the protocol stack which are not implemented by apparatus 10, namely the Application Layer 16 and the Data Post Processing Layer 18.

The signal processing unit 64 may be configured to operate in accordance with an operating system of the network node 60. The network node 60 may be formed as a personal computer which runs an operating system, e.g. Linux or Windows, wherein the signal processing unit 64 may be formed as a CPU of the personal computer. The apparatus 10, 10-c, respectively, is configured to perform encryption or decryption independent from the operating system of the network node 60, as encryption and decryption is performed by the hard-wired encryption circuit 31.

Further embodiments show a network node 60 with one of the apparatus 10a-d, wherein the signal processing unit 64 is configured to implement those layers of the TCP/IP or the OSI model, whose layers are not implemented by hard-wired circuits of the particular apparatus 10a-c.

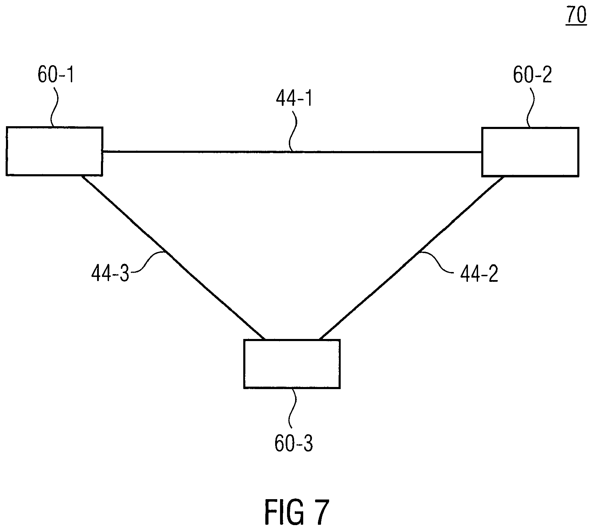

Fig. 7 shows a schematic block diagram of a communication network 70 comprising the network nodes 60-1, 60-2 and 60-3, wherein network node 60-1 is connected to the network nodes 60-2 and 60-3 via the Ethernet cables 44-1 and 44-3 and wherein the network node 60-3 is connected to the network nodes 60-1 and 60-2 via the Ethernet cables 44-2 and 44-3.

A communication network may comprise any number of communicating peers or apparatus with a total number of greater than one. In case the communication network 70 is built by two or more network nodes 60 which are configured to exchange data with a high speed, a speed of data transmission may be increased by performing encryption on hardware level. A reduced load of the CPU or the signal processing unit may increase the amount of data processed by the CPU or the signal processing unit and therefore may increase the data transmission utilizing existing infrastructure in the form of wired or wireless communication or network media, such as Ethernet cables or WLAN media.

Although the above described embodiments relate to an Ethernet cable as the network medium, different network media may also be utilized, such as for example a wireless local area network (WLAN), a wireless metropolitan area network (WMAN) or an actuator sensor interface (ASI) bus.

Although the above described embodiments relate to one hard-wired circuit for performing the functionality of a layer of the communication model arranged within the hardware domain, embodiments provide hard-wired circuits which implement the functionality of more than one layer, a part of a layer or parts of two or more different layers.

Embodiments show a hard-wired circuit configured to perform the functionality of at least one layer of the communication model and additionally the functionality of encryption or decryption, wherein parts of the circuit for performing the functionality of the respective layer and the circuit for performing decryption or encryption are arranged at the same printed circuit board (PCB) and form a common hard-wired circuit.

Although the logic configured to enable a deactivation of the encryption was described as being connected to the TCP Transport Layer and the Application Layer 16, the logic may be connected to other layers, enabling the signal to be communicated to bypass the Encryption Layer. Thus the logic may be connected to layers between which the Encryption Layer is arranged. Alternatively or in addition, the logic may be connected by a unidirectional path to one or more layers to only enable the signal to bypass encryption or decryption depending on the direction of the corresponding path.

The encryption algorithm is implemented as a hard-wired circuit and implements the functionality of the Encryption Layer. The Encryption Layer and therefore the encryption algorithm can be part of Physical Layer. Alternatively, the hard-wired encryption circuit and therefore the encryption algorithm can be implemented as standalone hardware IP core. The algorithm can encrypt data right after the Network Layer. The key for the encryption can be read out of the Network Layer for example and stored in the storage.

In other words, the herein described invention has the intention to simplify data encryption while the encryption key complexity remains manageable. Besides this, the described invention likes to benefit from existing encryption technologies. Therefore, the invention provides a hardware accelerated TCP/IP-based network security system.

Although the above described embodiments provide an apparatus with a hardware-based standalone encryption, the encryption may also be combined with a hard-wired circuit of a layer configured to implement the functionality of a layer of the communication model, e.g. the Physical Layer.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a data carrier having electronically readable control signals, which are capable of cooperating with a programmable computer system, such that one of the methods described herein is performed.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. Apparatus (10; 10a-c) for communicating a signal according to a communication model (11; 11a; 58) which is described by a plurality of layers (16;16a-c; 18; 22; 22'; 24; 24'; 26; 28; 28'; 32; 62), each layer (16;16a-c; 18; 22; 22'; 24; 24'; 26; 28; 28'; 32; 62) describing a subset of a functionality of the communication model (11; 11 a; 58), the apparatus (10; 10a-c) comprising:
a first hard-wired circuit (21; 23; 25; 27) at least partially implementing a functionality of a first layer (22; 24; 26; 28) of the plurality of layers (16;16a-c; 18; 22; 22'; 24; 24'; 26; 28; 28'; 32; 62);
a hard-wired encryption circuit (31) for encrypting or decrypting the signal to be communicated;
wherein the hard-wired encryption circuit (31) comprises a re-configurable circuitry, wherein a re-configuration of the re-configurable circuitry provides an upgrade or update of the encryption.

2. Apparatus (10; 10a-c) according to claim 1, comprising
a first terminal (36) configured to receive or transmit the signal; wherein
the hard-wired encryption circuit (31) is arranged between the first hard-wired circuit (21; 23; 25; 27; 31) and the first terminal (36).

3. Apparatus (10; 10a-c) according to claim 2, comprising:
a second hard-wired circuit (21; 23; 25; 27) at least partially implementing a functionality of a second layer (22; 24; 26; 28) of the plurality of layers (16;16a-c; 18; 22; 22'; 24; 24'; 26; 28; 28'; 32; 62);
a second terminal (42; 42a) configured to be connected to a communication network for receiving or transmitting the signal; wherein
the first terminal (36) is configured to receive the signal to be output at the second terminal (42; 42a) or to output the signal received at the second terminal (42; 42a).

4. Apparatus (10; 10a-c) according to claim 1, comprising:
a second hard-wired circuit (21; 23; 25; 27) at least partially implementing a functionality of a second layer (22; 24; 26; 28) of the plurality of layers (16;16a-c; 18; 22; 22'; 24; 24'; 26; 28; 28'; 32; 62); wherein
the hard-wired encryption circuit (31) is arranged between the first and the second hard-wired circuit (21; 23; 25; 27).

5. Apparatus (10; 10a-c) according to one of claims 1-4, comprising:
a storage (48) for holding an encryption key or a decryption key for use by the hard-wired encryption circuit (31).

6. Apparatus (10; 10a-c) according to claim 5, wherein
the storage (48) comprises a memory element connected to the hard-wired encryption circuit (31) or is part of the hard-wired encryption circuit (31).

7. Apparatus (10; 10a-c) according to claim 5 or claim 6 comprising
an Input / Output (IO) interface (52) connected with the storage

8. Apparatus (10; 10a-c) according to one of claims 1-7 comprising
a logic (46) configured to enable or disable encryption or decryption of the hard-wired encryption circuit (31) responsive to a predefined parameter associated with the signal.

9. Apparatus (10; 10a-c) according to claim 8, wherein
the logic (46) is configured to cause the signal to bypass the hard-wired encryption circuit (31) in case the predefined parameter indicates that the signal requires no encryption or decryption.

10. Apparatus (10; 10a-c) according to claim 9, wherein
the (46) logic is further configured to cause the signal to pass through the hard-wired encryption circuit (31) in case the predefined parameter indicates that the signal requires encryption or decryption.

11. Apparatus (10; 10a-c) according to one of claim 1-10, comprising
One or more further hard-wired circuits (21; 23; 25; 27) at least partially implementing a functionality of one or more further layers (22; 24; 26; 28) of the plurality of layers (16;16a-c; 18; 22; 22'; 24; 24'; 26; 28; 28'; 32; 62); wherein
the respective hard-wired circuits (21; 23; 25; 27) implement the functionality of one of a TCP- (28), IP- (26), Network- (24) or Physical Layer (22).

12. Apparatus (10; 10a-c) according to one of claim 1-11, wherein the communication model (11; 11a; 58) is a model according to the Transmission Control Protocol / Internet Protocol (TCP/IP) or according to the Open Systems Interconnection (OSI) reference model.

13. Network node (60-1; 60-2; 60-3) for communicating a signal according to a communication model which is described by a plurality of layers (16;16a-c; 18; 22; 22'; 24; 24'; 26; 28; 28'; 32; 62), each layer (16;16a-c; 18; 22; 22'; 24; 24'; 26; 28; 28'; 32; 62) describing a subset of a functionality of the communication model (11; 11 a; 58), the network node (60) comprising:
an apparatus (10; 10a-c) according to one of claims 1-12;
a signal processing (64) unit configured to implement the remaining layers of the plurality of layers (16;16a-c; 18; 22; 22'; 24; 24'; 26; 28; 28'; 32; 62).

14. Network node (60-1; 60-2; 60-3) according to claim 13, wherein
the signal processing unit (64) is configured to operate in accordance with an operating system; and
the apparatus (10; 10a-c) is configured to perform encryption or decryption independent from the operating system of the network node (60-1; 60-2; 60-3).

15. Communication network (70) comprising:
a plurality of network nodes (60; 60-1; 60-2; 60-3) according to claim 13 or claim 14.

## Patentansprüche

1. Vorrichtung (10; 10a-c) zum Kommunizieren eines Signals gemäß einem Kommunikationsmodell (11; 11 a; 58), das durch eine Mehrzahl von Schichten (16;16a-c; 18; 22; 22'; 24; 24'; 26; 28; 28'; 32; 62) beschrieben ist, wobei jede Schicht (16;16a-c; 18; 22; 22'; 24; 24'; 26; 28; 28'; 32; 62) einen Teilsatz einer Funktionalität des Kommunikationsmodells (11; 11a; 58) beschreibt, wobei die Vorrichtung (10; 10a-c) folgende Merkmale aufweist:
eine erste festverdrahtete Schaltung (21; 23; 25; 27), die zumindest teilweise eine Funktionalität einer ersten Schicht (22; 24; 26; 28) der Mehrzahl von Schichten (16;16a-c; 18; 22; 22'; 24; 24': 26; 28; 28'; 32; 62) implementiert;
eine festverdrahtete Verschlüsselungsschaltung (31) zum Verschlüsseln oder Entschlüsseln des Signals, das zu kommunizieren ist;
wobei die festverdrahtete Verschlüsselungsschaltung (31) eine erneut konfigurierbare Schaltungsanordnung aufweist, wobei eine erneute Konfiguration der erneut konfigurierbaren Schaltungsanordnung eine Verbesserung oder Aktualisierung der Verschlüsselung bereitstellt.

2. Vorrichtung (10; 10a-c) gemäß Anspruch 1, die folgende Merkmale aufweist:
einen ersten Anschluss (36), der dazu ausgebildet ist, das Signal zu empfangen oder zu senden; wobei
die festverdrahtete Verschlüsselungsschaltung (31) zwischen der ersten festverdrahteten Schaltung (21; 23; 25; 27; 31) und dem ersten Anschluss (36) angeordnet ist.

3. Vorrichtung (10; 10a-c) gemäß Anspruch 2, die folgende Merkmale aufweist:
eine zweite festverdrahtete Schaltung (21; 23; 25; 27), die zumindest teilweise eine Funktionalität einer zweiten Schicht (22; 24; 26; 28) der Mehrzahl von Schichten (16;15a-c; 18; 22; 22'; 24; 24'; 26; 28; 28'; 32; 62) implementiert;
einen zweiten Anschluss (42; 42a), der dazu ausgebildet ist, mit einem Kommunikationsnetzwerk zum Empfangen oder Senden des Signals verbunden zu sein; wobei
der erste Anschluss (36) dazu ausgebildet ist, das an dem zweiten Anschluss (42; 42a) auszugebende Signal zu empfangen oder das an dem zweiten Anschluss (42; 42a) empfangene Signal auszugeben.

4. Vorrichtung (10; 10a-c) gemäß Anspruch 1, die folgende Merkmale aufweist:
eine zweite festverdrahtete Schaltung (21; 23; 25; 27), die zumindest teilweise eine Funktionalität einer zweiten Schicht (22; 24; 26; 28) der Mehrzahl von Schichten (16;16a-c; 18; 22; 22'; 24; 24'; 26; 28; 28'; 32; 62) implementiert; wobei
die festverdrahtete Verschlüsselungsschaltung (31) zwischen der ersten und der zweiten festverdrahteten Schaltung (21; 23; 25; 27) angeordnet ist.

5. Vorrichtung (10; 10a-c) gemäß einem der Ansprüche 1 bis 4, die folgende Merkmale aufweist:
einen Speicher (48) zum Halten eines Verschlüsselungsschlüssels oder Entschlüsselungsschlüssels zur Verwendung durch die festverdrahtete Verschlüsselungsschaltung (31).

6. Vorrichtung (10; 10a-c) gemäß Anspruch 5, bei der
der Speicher (48) ein Speicherungselement aufweist, das mit der festverdrahteten Verschlüsselungsschaltung (31) verbunden ist oder Teil der festverdrahteten Verschlüsselungsschaltung (31) ist.

7. Vorrichtung (10; 10a-c) gemäß Anspruch 5 oder Anspruch 6, die folgendes Merkmal aufweist:
eine Eingabe-/Ausgabe(IO)-Schnittstelle (52), die mit dem Speicher verbunden ist.

8. Vorrichtung (10; 10a-c) gemäß einem der Ansprüche 1 bis 7, die folgendes Merkmal aufweist:
eine Logikeinrichtung (46), die dazu ausgebildet ist, eine Verschlüsselung oder Entschlüsselung der festverdrahteten Verschlüsselungsschaltung (31) ansprechend auf einen vordefinierten Parameter, der dem Signal zugeordnet ist, zu aktivieren oder zu deaktivieren.

9. Vorrichtung (10; 10a-c) gemäß Anspruch 8, bei der
die Logikeinrichtung (46) dazu ausgebildet ist, zu bewirken, dass das Signal die festverdrahtete Verschlüsselungsschaltung (31) umgeht, falls der vordefinierte Parameter angibt, dass das Signal keine Verschlüsselung oder Entschlüsselung benötigt.

10. Vorrichtung (10; 10a-c) gemäß Anspruch 9, bei der
die Logikeinrichtung (46) ferner dazu ausgebildet ist, zu bewirken, dass das Signal die festverdrahtete Verschlüsselungsschaltung (31) durchläuft, falls der vordefinierte Parameter angibt, dass das Signal Verschlüsselung oder Entschlüsselung benötigt.

11. Vorrichtung (10; 10a-c) gemäß einem der Ansprüche 1 bis 10, die folgende Merkmale aufweist:
eine oder mehrere festverdrahtete Schaltungen (21; 23; 25; 27), die zumindest teilweise eine Funktionalität einer oder mehrerer weiterer Schichten (22; 24; 26; 28) der Mehrzahl von Schichten (10;16a-c; 18; 22; 22'; 24; 24'; 26; 28; 28'; 32; 62) implementieren; wobei
die jeweiligen fesfiverdrahteten Schaltungen (21; 23; 25; 27) die Funktionalität von einer TCP- (28), IP- (26), Netzwerk- (24) oder physischen Schicht (22) implementieren.

12. Vorrichtung (10; 10a-c) gemäß einem der Ansprüche 1 bis 11, bei der das Kommunikationsmodell (11; 11a; 58) ein Modell gemäß dem Transmission Control Protocol / Internet Protocol (TCP/IP) oder gemäß dem Open-Systems-Interconnection(OSI)-Referenzmodell ist.

13. Netzwerkknoten (60-1; 60-2; 60-3) zum Kommunizieren eines Signals gemäß einem Kommunikationsmodell, das durch eine Mehrzahl von Schichten (16;16a-c; 18; 22; 22'; 24; 24'; 26; 28; 28'; 32; 62) beschrieben wird, wobei jede Schicht (16;16a-c; 18; 22; 22'; 24; 24'; 26; 28; 28'; 32; 62) einen Teilsatz einer Funktionalität des Kommunikationsmodells (11; 11a; 58) beschreibt, wobei der Netzwerkknoten (60) folgende Merkmale aufweist:
eine Vorrichtung (10; 10a-c) gemäß einem der Ansprüche 1-12;
eine Signalverarbeitungseinheit (64), die dazu ausgebildet ist, die verbleibenden Schichten der Mehrzahl von Schichten (16;16a-c; 18; 22; 22'; 24; 24'; 26; 28; 28'; 32; 62) zu implementieren.

14. Netzwerkknoten (60-1; 60-2; 60-3) gemäß Anspruch 13, bei dem
die Signalverarbeitungseinheit (64) dazu ausgebildet ist, gemäß einem Betriebssystem zu wirken; und
die Vorrichtung (10; 10a-c) dazu ausgebildet ist, eine Verschlüsselung oder Entschlüsselung unabhängig von dem Betriebssystem des Netzwerkknotens (60-1; 60-2; 60-3) durchzuführen.

15. Kommunikationsnetzwerk (70), das folgendes Merkmal aufweist:
eine Mehrzahl von Netzwerkknoten (60; 60-1; 60-2; 60-3) gemäß Anspruch 13 oder Anspruch 14.

## Revendications

1. Appareil (10; 10a à c) pour communiquer un signal selon un modèle de communication (11; 11a; 58) qui est décrit par une pluralité de couches (16; 16a à c; 18; 22; 22'; 24; 24', 26; 28; 28'; 32; 62), chaque couche (16; 16a à c; 18; 22; 22'; 24; 24'; 26; 28; 28'; 32; 62) décrivant un sous-ensemble d'une fonctionnalité du modèle de communication (11; 11a; 58), l'appareil (10; 10a à c) comprenant:
un premier circuit câblé (21, 23; 25; 27) mettant en oeuvre au moins partiellement une fonctionnalité d'une première couche (22; 24; 26; 28) de la pluralité de couches (16; 16a à c; 18; 22; 22'; 24; 24'; 26; 28; 28'; 32; 62);
un circuit de cryptage câblé (31) destiné à crypter ou décrypter le signal à communiquer;
dans lequel le circuit de cryptage câblé (31) comprend des circuits reconfigurables, dans lequel une reconfiguration des circuits reconfigurables permet une mise à niveau ou une mise à jour du cryptage.

2. Appareil (10; 10a à c) selon la revendication 1, comprenant
une première borne (36) configurée pour recevoir ou transmettre le signal; dans lequel
le circuit de cryptage câblé (31) est disposé entre le premier circuit câblé (21; 23; 25; 27; 31) et la première borne (36).

3. Appareil (10; 10a à c) selon la revendication 2, comprenant:
un deuxième circuit câblé (21; 23; 25; 27) mettant en oeuvre au moins partiellement une fonctionnalité d'une deuxième couche (22; 24; 26; 28) de la pluralité de couches (16; 16a à c; 18; 22; 22'; 24; 24'; 26; 28; 28'; 32; 62);
une deuxième borne (42; 42a) configurée pour être connectée à un réseau de communication pour recevoir ou transmettre le signal; dans lequel
la première borne (36) est configurée pour recevoir le signal à sortir à la deuxième borne (42; 42a) ou pour sortir le signal reçu à la deuxième borne (42; 42a).

4. Appareil (10; 10a à c) selon la revendication 1, comprenant:
un deuxième circuit câblé (21; 23; 25; 27) mettant en oeuvre au moins partiellement une fonctionnalité d'une deuxième couche (22; 24; 26; 28) de la pluralité de couches (16; 16a à c; 18; 22; 22'; 24; 24'; 26; 28; 28'; 32; 62); dans lequel
le circuit de cryptage câblé (31) est disposé entre le premier et le deuxième circuit câblé (21; 23; 25; 27).

5. Appareil (10; 10a à c) selon l'une des revendications 1 à 4, comprenant:
une mémoire (48) destinée à contenir une clé de cryptage ou une clé de décryptage à utiliser par le circuit de cryptage câblé (31).

6. Appareil (10; 10a à c) selon la revendication 5, dans lequel
la mémoire (48) comprend un élément de mémoire connecté au circuit de cryptage câblé (31) ou qui fait partie du circuit de cryptage câblé (31).

7. Appareil (10; 10a à c) selon la revendication 5 ou la revendication 6, comprenant
une interface d'Entrée/Sortie (ES) (52) connectée à la mémoire.

8. Appareil (10; 10a à c) selon l'une des revendications 1 à 7, comprenant
une logique (46) configurée pour activer ou désactiver le cryptage ou le décryptage du circuit de cryptage câblé (31) réagissant à un paramètre prédéfini associé au signal.

9. Appareil (10; 10a à c) selon la revendication 8, dans lequel
la logique (46) est configurée pour amener le signal à contourner le circuit de cryptage câblé (31) au cas où le paramètre prédéfini indique que le signal ne requiert pas de cryptage ou décryptage.

10. Appareil (10; 10a à c) selon la revendication 9, dans lequel
la logique (46) est par ailleurs configurée pour amener le signal à passer par le circuit de cryptage câblé (31) au cas où le paramètre prédéfini indique que le signal requiert un cryptage ou décryptage.

11. Appareil (10; 10a à c) selon l'une des revendications 1 à 10, comprenant
un ou plusieurs autres circuits câblés (21; 23; 25; 27) mettant en oeuvre au moins partiellement une fonctionnalité d'une ou plusieurs autres couches (22; 24; 26; 28) de la pluralité de couches (16; 16a à c; 18; 22; 22'; 24; 24'; 26; 28; 28'; 32; 62); dans lequel
les circuits câblés respectifs (21; 23; 25; 27) mettent en oeuvre la fonctionnalité de l'une parmi une couche TCP (28), une couche IP (26), une couche de réseau (24) ou une couche physique (22).

12. Appareil (10; 10a à c) selon l'une des revendications 1 à 11, dans lequel le modèle de communication (11; 11a; 58) est un modèle selon le Protocole de Commande de Transmission / Protocole Internet (TCP/IP) ou selon le modèle de référence d'Interconnexion de Systèmes Ouverts (OSI).

13. Noeud de réseau (60-1; 60-2; 60-3) pour communiquer un signal selon un modèle de communication qui est décrit par une pluralité de couches (16; 16a à c; 18; 22; 22'; 24; 24', 26; 28; 28'; 32; 62), chaque couche (16; 16a à c; 18; 22; 22'; 24; 24'; 26; 28; 28'; 32; 62) décrivant un sous-ensemble d'une fonctionnalité du modèle de communication (11; 11a; 58), le noeud de réseau (60) comprenant:
un appareil (10; 10a à c) selon l'une des revendications 1 à 12;
une unité de traitement de signal (64) configurée pour mettre en oeuvre les couches restantes de la pluralité de couches (16; 16a à c; 18; 22; 22'; 24; 24'; 26; 28; 28'; 32; 62).

14. Noeud de réseau (60-1; 60-2; 60-3) selon la revendication 13, dans lequel
l'unité de traitement de signal (64) est configurée pour fonctionner selon un système d'exploitation; et
l'appareil (10; 10a à c) est configuré pour effectuer le cryptage ou décryptage indépendamment du système d'exploitation du noeud de réseau (60-1; 60-2; 60-3).

15. Réseau de communication (70), comprenant:
une pluralité de noeuds de réseau (60; 60-1; 60-2; 60-3) selon la revendication 13 ou la revendication 14.
